Europäisches Patentamt

European Patent Office

Office européen des brevets

(19)

(11) Publication number: **0 061 903**
**B1**

(12) **EUROPEAN PATENT SPECIFICATION**

(45) Date of publication of patent specification: **30.07.86**

(51) Int. Cl.⁴: **F 16 H 3/08**

(21) Application number: **82301580.5**

(22) Date of filing: **25.03.82**

(54) **Rotary transmission.**

(30) Priority: **27.03.81 GB 8109718**

(43) Date of publication of application:
**06.10.82 Bulletin 82/40**

(45) Publication of the grant of the patent:
**30.07.86 Bulletin 86/31**

(84) Designated Contracting States:
**DE FR IT SE**

(56) References cited:
**DE-C- 938 106**
**FR-A-1 575 789**
**GB-A- 145 827**
**GB-A- 808 546**
**US-A-2 991 661**

**AUTOMOTIVE ENGINEERING, vol. 88, no. 6,
June 1980, NEW YORK (US) "Economy
automatic with constant-mesh gearing", pages
87-88**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Burke, John Pius
27 Acacia Road
Leamington Spa Warwickshire (GB)**
Inventor: **Young, Alastair John
39 Roundshill
Kenilworth Warwickshire (GB)**

(74) Representative: **Adkins, Michael et al
Withers & Rogers 4 Dyer's Buildings
Holborn London, EC1N 2JT (GB)**

Courier Press, Leamington Spa, England.

## Description

This invention relates to rotary transmissions of the dual clutch kind by which is meant a transmission having gear trains each being one of a set providing a series of increasing speed ratios, and two clutches independently operable and providing alternative drive paths through the gear trains between a common input and a common output, the gear trains of alternate speed ratios in the set being driven respectively through one and the other clutch.

The invention is particularly though not exclusively applicable to drive transmissions for motor vehicles.

One example of a dual clutch type transmission is known from British Patent Specification No: 145827 (Bramley-Moore) which includes first, second and third two-wheel gear trains each being one of a set providing a series of increasing speed ratios and two clutches independently operable and providing alternative drive paths through the first, second and third gear trains between a common input shaft and a common output shaft the gear trains of alternative ratios in the set being driven respectively through one and the other clutch.

Other examples of dual clutch transmissions are shown in British Patent Specification Nos: 585716 (Kegress) and 795260 (David Brown).

To the best of our knowledge none of the above prior proposals has been commercially adopted.

Current· motor vehicle design trends indicate that an increasing proportion of vehicle production will be front wheel drive. In order to reduce overall vehicle length and provide increased passenger accommodation many such front wheel drive vehicles have a transverse engine installation.

Small transverse engined vehicles have little space between the front wheel suspension and steering mechanisms to site the power unit. It has been proposed to place the transmission beneath the engine but this leads to a reduced ground clearance and to a high bonnet line with consequent reduced driver visibility. Although small transverse engined vehicles having transmissions placed alongside the engine are known it is uncommon to find such vehicles fitted with a fully automatic transmission since these transmissions are inherently more bulky than an equivalent manual transmission.

The present invention seeks to provide an improved transmission of a dual clutch kind, of compact size and suitable for fully automatic operation.

According to one aspect of the invention there is provided a rotary transmission having first, second and third two-wheel gear trains each being one of a set providing a series of increasing speed ratios and two clutches independently operable and providing alternative drive paths through the first, second and third gear trains between a common input shaft and a common output shaft the gear trains of alternative ratios in the set being driven respectively through one and the other clutch, characterised in that one clutch is arranged to drive the output shaft either through first two wheel gear train of which the second gear wheel is engageable with the output shaft (second speed) or through the second two wheel gear train of which the first wheel is a gear wheel driven directly from the input shaft and the second wheel is a gear wheel interengaged with the first wheel and journalled on the output shaft and engageable with a sleeve wheel journalled on and engageable with the output shaft so that the second wheel cannot drive the output shaft except through the sleeve wheel, (4th gear) and the other clutch is arranged to drive the output shaft either through the third two-wheel gear train of which the second gear wheel is provided by the sleeve wheel (3rd gear) or through a six-wheel gear train of which all the gear wheels are members of the first, second and third mentioned trains (1st gear).

According to another aspect of the invention there is provided a rotary transmission having first, second, and third two wheel gear trains each being one of a set providing a series of increasing speed ratios and two clutches independently operable and providing alternative drive paths through the first, second and third gear trains between a common input shaft and a common output shaft, the gear trains of alternative ratios in the set being driven respectively through one and the other clutch, characterised in that one clutch is arranged to drive the output shaft through the first two-wheel gear train of which the second gear wheel is engageable with the output (2nd speed) or through a second two-wheel gear train (4th speed) and the other clutch is arranged to drive the output shaft either through the third two-wheel gear train (3rd gear) of which the second gear wheel is provided by a sleeve wheel journalled on the output shaft and engageable either with the output shaft or with the second gear wheel of gear train, or through a six-wheel gear train of which all the gear wheels are members of the first, second and third mentioned trains.

Such rotary transmissions have the additional advantage that they provide four speed ratios from only three gear wheel pairs between an input shaft and an output shaft whereas a conventional single clutch transmission requires four gear wheel pairs. The cost of a transmission according to the invention can thus show substantial savings, gear wheels being relatively expensive components to manufacture.

Preferably the clutches are arranged one at each side of the set of gear trains. Such positioning of the clutches leads to a particularly compact arrangement and the driving gears of said first, second and third mentioned trains can be conveniently journalled on a common driving shaft for the clutches.

The two wheel gear train and three wheel train driven through said clutch may have respective driving gears fast for rotation in common.

The two-wheel gear train which is driven through the said one clutch preferably includes a driven gear which is journalled on the output shaft, selector means being provided for drivably connecting the driven gear to the output shaft. The second wheel of the said three wheel gear train may be journalled on the output shaft between the sleeve wheel and the selector means for drivably connecting the aforesaid driven gear to the output shaft.

Preferably, the second gear wheel of the two-wheel gear train which is driven through said other clutch is arranged between selector means for drivably connecting the sleeve wheel to the second wheel of the three wheel gear train and a further selector means for drivably connecting the second gear wheel of the said two wheel gear train to the output shaft.

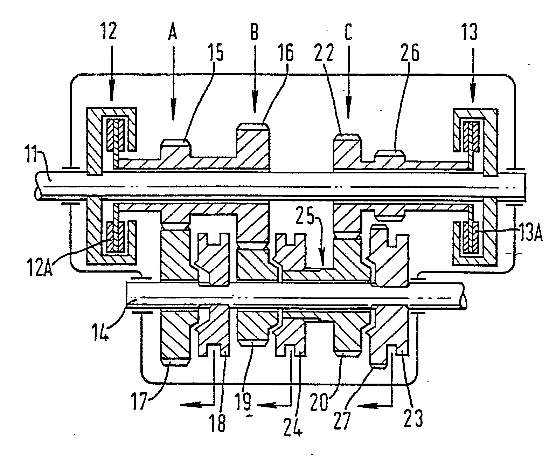

A rotary transmission in accordance with the invention will now be described by way of example with reference to the accompanying drawing which is a schematic illustration of a four speed constant-mesh transmission for a front engine front wheel drive vehicle.

With reference to the drawings, there is shown an input shaft 11 from an engine (not shown) and connectable through clutches 12, 13 and sets of two wheel gear trains A, B and C to drive an output shaft 14. The output shaft is for connection to the vehicle driving wheels through, for example, a differential gear.

One clutch 12 has driving gear wheels 15, 16 of gear trains A and B fast for rotation with its driven member 12A. A driven gear wheel 17 of train A is journalled on the layshaft 14 and is connectable thereto by a synchroniser assembly 18. Such a synchroniser is well known in the rotary transmission art and will not be further described here.

A driven gear wheel 19 of train B is journalled on the layshaft 14 for connection thereto through a driven sleeve wheel 25 of train C as will be subsequently described.

Gear train C has a driving gear wheel 22 fast with the driven member of the other clutch 13 which meshes with a driven gear 20 on the sleeve wheel. The sleeve wheel is journalled on the output shaft for connection thereto by a synchroniser assembly 23. Another synchroniser assembly 24 is mounted on the sleeve wheel 25 to connect that wheel to the driven gear wheel 19 of gear train B.

It is intended that operation of the clutches 12, 13 and the synchroniser assemblies 18, 23 and 24 will be in response to an electro-hydraulic automatic control system (not shown). A pump (not shown) to provide hydraulic fluid under pressure to such an electro hydraulic control system may be conveniently driven from the input shaft 11 between the gear trains B and C.

A reverse speed ratio may be provided in any conventional manner. In the present embodiment a driven gear 26 from the clutch 13 is connectable to a driven gear wheel 27 formed as part of the synchroniser assembly 23 through a disengageable lay gear (not shown). The lay gear reverses rotation of the drive from the input shaft 11 to the output shaft 14.

Operation of the transmission is as follows:

With the vehicle engine running, both clutches 12, 13 are initially disengaged, and the synchroniser assemblies 18, 23 and 24 are also initially disengaged.

To move off from rest synchroniser assemblies 18 and 24 are shifted to engage the respective gear wheels 17 and 19 and clutch 13 is engaged so that drive is transmitted through the six gear wheels 22, 20, 19, 16, 15 and 17 of gear trains C, B and A to the output shaft 14. The novel arrangement of synchroniser assemblies provides for the driven gear wheels of trains B and C to be connected together for rotation in common about the output shaft 14, the driven member 12A of clutch 12 being driven idly about the input shaft 11.

Second speed ratio is preselected by the idle driving of clutch driven member 12A and the ratio change is effected by simultaneously disengaging clutch 13 and engaging clutch 12. Drive is now through gear train A to the layshaft and synchroniser assembly 24 may be disengaged.

Third speed ratio is preselected by the engagement of synchroniser 23 to drive clutch driven member 13A idly. At the appropriate moment clutch 13 is engaged as clutch 12 is disengaged and drive is transmitted through gear train C to the layshaft. Synchroniser assembly 18 may be disengaged.

Fourth speed ratio is preselected by engagement of synchroniser assembly 24. Engagement of clutch 12 as clutch 13 is disengaged provides drive through gear train B, sleeve wheel 25 and synchroniser assembly 23.

Ratio downchanges are effected in the reverse manner to the upchanges, by preselecting the next sequential ratio and changing drive from one clutch to the other.

Additional sets of gear wheels may be provided to increase the number of speed ratios available. The embodiment described is only one of a number of alternative versions of the invention and it is not intended that the invention be limited by the particular arrangement of gear wheels and synchroniser assemblies disclosed.

In one alternative embodiment, the fourth-speed ratio may be connected to the output shaft through synchroniser assembly 18 instead of through the sleeve wheel 25. In this case the synchroniser assembly 18 would be double sided. Such assemblies are well-known in the manual-change transmission art.

**Claims**

1. A rotary transmission having first, second and third two wheel gear trains (A, B and C) each being one of a set providing a series of increasing speed ratios and two clutches (12, 13) independently operable and providing alternative drive paths through the first, second and third gear trains between a common input shaft (11) and a common output shaft (14) the gear trains of alternative ratios in the set being driven respectively through one and the other clutch, characterised in that one clutch (12) is arranged to drive the output shaft (14) either through first two wheel gear train (A) of which the second gear wheel (17) is engageable (at 18) with the output shaft (2nd speed) or through the second two wheel gear train (b) of which the first wheel (16) is a gear wheel driven directly from the input shaft and the second wheel (19) is a gear wheel interengaged with the first wheel and journalled on the output shaft and engageable (at 24) with a sleeve wheel (25) journalled on and engageable (at 23) with the output shaft so that the second wheel cannot drive the output shaft except through the sleeve wheel (4th gear) and the other clutch (13) is arranged to drive the output shaft either through the third two-wheel gear train (C) of which the second gear wheel (20) is provided by the sleeve wheel (25) (3rd gear) or through a six-wheel gear train of which all the gear wheels (22, 20, 19, 16, 15 and 17) are members of the first, second and third mentioned trains (A, B and C) (1st gear).

2. A rotary transmission having first, second and third two-wheel gear trains (A, B and C) each being one of a set providing a series of increasing speed ratios and two clutches (12, 13) independently operable and providing alternative drive paths through the first, second and third gear trains between a common input shaft (11) and a common output shaft (14), the gear trains of alternative ratios in the set being driven respectively through one and the other clutch, characterised in that one clutch (12) is arranged to drive the output shaft (14) through the first two-wheel gear train (A) of which the second gear wheel (17) is engageable (at 18) with the output shaft (2nd speed) or through a second two wheel gear train (B) (4th speed) and the other clutch (13) is arranged to drive the output shaft either through the third two wheel gear train (C) (3rd gear) of which the second gear wheel (20) is provided by a sleeve wheel (25) journalled on the output shaft and engageable (at 23 or 24) either with the output shaft (14) or with the second gear wheel (19) of gear train (B), or through a six-wheel gear train of which all the gear wheels (22, 20, 19, 16, 15 and 17) are members of the first, second and third mentioned trains (A, B and C).

3. A rotary transmission according to claim 1 or 2 characterised in that the clutches (12, 13) are arranged one at each side of the set of gear trains.

4. A rotary transmission according to claim 3 characterised in that driving gears (15, 16 and 22) of said first, second and third mentioned trains (A, B and C) are journalled on a common driving shaft (11) for said clutches.

5. A rotary transmission according to claim 4 characterised in that the first and second two wheel gear trains (A, B) driven through said one clutch (12) have respective driving gear wheels (15, 16) fast for rotation in common.

6. A rotary transmission according to any preceding claim characterised in that the two wheel gear train (A) which is driven through the said one clutch (12) includes a driven gear (17) journalled on the output shaft (14), selector means (18) being provided for drivably connecting the driven gear (17) to the output shaft (14).

7. A rotary transmission according to claim 6 characterised in that the said second wheel (19) of the said second two wheel train (B) is journalled on the output shaft (14) between the sleeve wheel (25) and the selector means (18) for drivably connecting the driven gear (17) to the output shaft (14).

8. A rotary transmission according to any preceding claim characterised in that the sleeve wheel (25) is arranged between the second wheel (19) of the said second two wheel gear train and selector means (23) for drivably connecting the sleeve wheel (75) to the output shaft (14).

## Revendications

1. Transmission rotative comportant des premier, second et troisième trains d'engrenage à deux roues (A, B et C) dont chacun fait partie d'un jeu fournissant une série de rapports de transmission croissants et deux embrayages (12, 13) manoeuvrables de manière indépendante et fournissant des trajets d'entraînement alternants à travers les premier, second et troisième trains d'engrenage entre un arbre d'entrée commun (11) et un arbre de sortie commun (14), les trains d'engrenage de rapports alternants dans le jeu étant entraînés respectivement par l'intermédiaire de l'un et l'autre embrayages, caractérisée en ce qu'un premier embrayage (12) est agencé pour entraîner l'arbre de sortie (14) soit par l'intermédiaire du premier train d'engrenage à deux roues (A) dont la seconde roue d'engrenage (17) peut venir en prise (en 18) avec l'arbre de sortie (2de vitesse) ou par l'intermediaire du second train d'engrenage à deux roues (B) dont la première roue (16) est une roue d'engrenage entraînée directement à partir ee l'arbre d'entrée et la seconde roue (19) est une roue d'engrenage engrenant mutuellement avec la première roue et montée à palier sur l'arbre de sortie et pouvant venir en prise (en 24) avec une roue-manchon (25) montée à palier sur, et pouvant venir en prise (en 23) sur l'arbre de sortie, de sorte que la seconde roue ne peut pas entraîner l'arbre de sortie si ce n'est par l'intermédiaire de la roue-manchon (4ème vitesse) et l'autre embrayage (13) est agencé de manière à entraîner l'arbre de sortie soit par l'intermédiaire du troisième train d'engrenage à deux roues (C) dont la second roue d'engrenage (20) est fournie par la roue-manchon (25) (3ème vitesse) ou par l'intermédiaire d'un train d'engrenage à six roues dont toutes les roues d'engrenage (22, 20, 19, 16, 15 et 17) sont des éléments des premier, second et troisième trains mentionnés (A, B et C) (1ère vitesse).

2. Transmission rotative comportant des premier, second et troisième trains d'engrenage à deux roues (A, B et C) dont chacun fait partie d'un jeu fournissant une série de rapports de transmission croissants et deux embrayages (12, 13) manoeuvrables de manière indépendante et fournissant des trajets d'entraînement alternants à travers les premier, second et troisième trains d'engrenage entre un arbre d'entrée commun (11) et un arbre de sortie commun (14), les trains d'engrenage de rapports alternants dans le jeu étant entraînés respectivement par l'intermédiaire de l'un et l'autre embrayages, caractérisée en ce qu'un premier embrayage (12) est agencé pour entraîner l'arbre de sortie (14) par l'intermédiaire du premier train d'engrenage à deux rous (A) dont la seconde roue d'engrenage (17) peut venir en prise (en 18) avec l'arbre de sortie (2de vitesse) ou par l'intermédiaire d'un second train d'engrenage à deux roues (B) (4ème vitesse) et l'autre embrayage (13) est agencé de manière à entraîner l'arbre de sortie soit par l'intermédiaire du troisième train d'engrenage à deux roues (C) (3ème vitesse) dont la seconde roue d'engrenage (20) est fournie par une roue-manchon (25) montée à palier sur l'arbre de sortie et pouvant venir en prise (en 23 ou 24) soit avec l'arbre de sortie (14), soit avec la seconde roue d'engrenage (19) du train d'engrenage (B), ou par l'intermédiaire d'un train d'engrenage à six roues dont toutes les roues d'engrenage (22, 20, 19, 16, 15 et 17) sont des éléments des premier, second et troisième trains (A, B et C) mentionnés.

3. Transmission rotative selon la revendication 1 ou 2, caractérisée en ce que les embrayages (12, 13) sont disposés un sur chaque côté du jeu de trains d'engrenage.

4. Transmission rotative selon la revendication 3, caractérisée en ce que les engrenages menants (15, 16 et 22) desdits premier, second et troisième trains mentionnés (A, B et C) sont montés à palier sur un arbre menant commun (11) prévu pour lesdits embrayages.

5. Transmission rotative selon la revendication 4, caractérisée en ce que les premier et second trains d'engrenage à deux roues (A, B) entraînés par l'intermédiaire dudit premier embrayage (12) présentent des roues d'engrenage menantes respectives (15, 16) solidaires pour une rotation en commun.

6. Transmission rotative selon une revendication précédente quelconque, caractérisée en ce que le train d'engrenages à deux roues (A) qui est entraîne par l'intermédiaire dudit premier embrayage (12) comprend un engrenage mené (17) monté à palier sur l'arbre de sortie (14), un moyen sélecteur (18) étant prévu pour relier à entraînement l'engrenage mené (17) à l'arbre de sortie (14).

7. Transmission rotative selon la revendication 6, caractérisée en ce que la seconde roue (19) dudit second train à deux roues (B) est montée à palier sur l'arbre de sortie (14) entre la roue-manchon (25) et le moyen sélecteurs (18) pour relier à entraînement l'engrenage mené (17) à l'arbre de sortie (14).

8. Transmission rotative selon une revendication précédente quelconque, caractérisée en ce que la roue-manchon (25) est disposée entre la seconde roue (19) dudit second train d'engrenage à deux roues et un moyen sélecteur (23) prévu pour relier à entraînement la roue-manchon (25) à l'arbre de sortie (14).

**Patentansprüche**

1. Drehbewegungsübertragungsgetriebe mit einem ersten, zweiten und dritten zweirädrigen Getriebe (A, B und C), von denen jedes eines von einem Satz ist, der eine Folge von zunehmenden Übersetzungsverhältnissen liefert, und zwei Kupplungen (12, 13), die unabhängig voneinander wirksam machbar sind und alternative Antriebswege durch das erste, zweite und dritte Getriebe zwischen einer gemeinsamen Eingangswelle (11) und einer gemeinsamen Ausgangswelle (14) liefern, wobei die Getriebe alternativer Verhältnisse in dem Satz durch die eine oder die andere Kupplung jeweils angetrieben werden, dadurch gekennzeichnet, daß eine Kupplung (12) so angeordnet ist, daß sie die Ausgangswelle (14) entweder über das erste zweirädrige Getriebe (A), von dem das zweite Getrieberad (17) mit der Ausgangswelle (2. Gang) in Eingriff (bei 18) bringbar ist, oder über das zweite zweirädrige Getriebe (B) antreibt, von dem das erste Rad (16) ein Getrieberad ist, das direkt von der Eingangswelle angetrieben wird, und das zweite Rad (19) ein Getrieberad ist, das mit dem ersten Rad in Eingriff steht und auf der Ausgangswelle drehbar gelagert ist und mit einem Hülsenrad (25) in Eingriff (bei 24) bringbar ist, das auf der Ausgangswelle drehbar gelagert ist und mit ihr in Eingriff (bei 23) bringbar ist, so daß das zweite Rad die Ausgangswelle nur über das Hülsenrad (4. Gang) antreiben kann, und die andere Kupplung (13) so angeordnet ist, daß sie die Ausgangswelle entweder über das dritte zweirädrige Getriebe (C), von dem das zweite Getrieberad (20) von dem Hülsenrad (25) (3. Gang) bereitgestellt wird, oder über ein sechsrädriges Getriebe antreibt, von dem alle Getrieberäder (22, 20, 19, 16, 15 und 17) Teile des ersten, zweiten und dritten erwähnten Getriebes (A, B und C) (1. Gang) sind.

2. Drehbewegungsübertragungsgetriebe mit einem ersten, zweiten und dritten zweirädrigen Getriebe (A, B und C) von denen jedes eines von einem Satz ist, der eine Folge von zunehmenden Übersetzungsverhältnissen liefert, und zwei Kupplungen (12, 13), die unabhängig voneinander wirksam machbar sind und alternative Antriebswege durch das erste, zweite und dritte Getriebe zwischen einer gemeisamen Eingangswelle (11) und einer gemeinsamen Ausgangswelle (14) liefern, wobei die Getriebe alternativer Verhältnisse in dem Satz jeweils durch die eine oder die andere Kupplung angetrieben werden, dadurch gekennzeichnet, daß eine Kupplung (12) so angeordnet ist, daß sie die Ausgangswelle (14) über das erste zweirädrige Getriebe (A), von dem das zweite Getrieberad (17) mit der Ausgangswelle (2. Gang) in Eingriff (bei 18) bringbar ist, oder über ein zweites zweirädriges Getriebe (B) (4. Gang) antreibt, und die andere Kupplung (13) so angeordnet ist, daß sie die Ausgangswelle entweder über das dritte zweirädrige Getriebe (C) (3. Gang), von dem das zweite Getrieberad (20) durch ein Hülsenrad (25) bereitgestellt wird, das auf der Ausgangswelle drehbar gelagert ist und entweder mit der Ausgangswelle (14) oder mit dem zweiten Getrieberad (19) des Getriebes (B) in Eingriff bringbar ist, oder über ein sechsrädriges Getriebe antreibt, von dem alle Getrieberäder (22, 20, 19, 16, 15 und 17) Teile des ersten, zweiten und dritten erwähnten Getriebes (A, B und C) sind.

3. Drehbewegungsübertragungsgetriebe nach Anspruch 1 oder 2, dadurch gekennzeichnet, daß eine Kupplung (12, 13) an jeder Seite des Getriebesatzes angeordnet ist.

4. Drehbewegungsübertragungsgetriebe nach Anspruch 3, dadurch gekennzeichnet, daß treibende Getrieberäder (15, 15 und 22) des ersten, zweiten und dritten erwähnten Getriebes (A, B und C) auf einer gemeinsamen treibenden Welle (11) für die Kupplungen drehbar gelagert sind.

5. Drehbewegungsübertragungsgetriebe nach Anspruch 4, dadurch gekennzeichnet, daß das erste und zweite zweirädrige Getriebe (A, B), die über die eine Kupplung (12) angetrieben werden, jeweilige treibende Getrieberäder (15, 16) haben, die für eine gemeinsame Drehbewegung fest miteinander verbunden sind.

6. Drehbewegungsübertragungsgetriebe nach irgendeinem vorhergehenden Anspruch, dadurch gekennzeichnet, daß das zweirädrige Getriebe (A), das über die eine Kupplung (12) angetrieben wird, ein angetriebenes Getrieberad (17) aufweist, das auf der Ausgangswelle (14) drehbar gelagert ist, wobei eine Wähleinrichtung (18) zum treibenden Verbinden des angetriebenen Getrieberades (17) mit der Ausgangswelle (14) vorgesehen ist.

7. Drehbewegungsübertragungsgetriebe nach Anspruch 6, dadurch gekennzeichnet, daß das zweite Rad (19) des zweiten zweirädrigen Getriebes (B) auf der Ausgangswelle (14) zwischen dem Hülsenrad (25) und der Wähleinrichtung (18) um treibenden Verbinden des angetriebenen Getrieberades (17) mit der Ausgangswelle (14) drehbar gelagert ist.

8. Drehbewegungsübertragungsgetriebe nach irgendeinem vorhergehenden Anspruch, dadurch gekennzeichnet, daß das Hülsenrad (25) zwischen dem zweiten Rad (19) des zweiten zweirädrigen Getriebes und einer Wähleinrichtung (23) zum treibenden Verbinden des Hülsenrades (5) mit der Ausgangswelle (14) angeordnet ist.